# EUROPÄISCHE PATENTSCHRIFT

(11) **EP 1 117 470 B1**
(45) Veröffentlichungstag und Bekanntmachung des Hinweises auf die Patenterteilung: **04.06.2003**
(21) Anmeldenummer: 99955831.5
(22) Anmeldetag: 01.10.1999
(51) Int. Cl.: B01D 53/02, B01J 20/28

(54) **FILTERMATERIAL FÜR FLUIDE MEDIEN SOWIE VERFAHREN UND VORRICHTUNG ZUR HERSTELLUNG EINES SOLCHEN FILTERMATERIALS**
FILTERING MATERIAL FOR FLUIDIC MEDIA AND A METHOD AND DEVICE FOR PRODUCING SUCH A FILTERING MATERIAL
MATERIAU FILTRANT POUR MILIEUX FLUIDES, ET PROCEDE ET DISPOSITIF POUR LA PRODUCTION D'UN TEL MATERIAU FILTRANT

(30) Priorität: 02.10.1998 DE 19845526
(43) Veröffentlichungstag der Anmeldung: 25.07.2001
(73) Patentinhaber: HELSA-WERKE HELMUT SANDLER GmbH & CO. KG, 95482 Gefrees (DE)
(72) Erfinder: ROSENBERG, Gerald, D-95186 Höchstädt (DE); ROBISCH, Martina, D-95126 Schwarzenbach (DE); KRULL, Uwe, D-95448 Bayreuth (DE)
(74) Vertreter: LOUIS- PÖHLAU- LOHRENTZ
(86) Internationale Anmeldenummer: DE9903162
(87) Internationale Veröffentlichungsnummer: WO00020099

(56) Entgegenhaltungen:
- EP-A- 0 818 230
- DE-A- 2 502 096
- US-A- 4 433 024
- US-A- 4 784 892
- US-A- 4 797 318
- US-A- 4 948 639

## Beschreibung

Die vorliegende Erfindung betrifft ein Filtermaterial, insbesondere in Form von Flächenware, für fluide Medien mit einer Trägerschicht und einer Adsorptionsschicht sowie ein Verfahren und eine Vorrichtung zur Herstellung einer derartigen Flächenware. Ein besonderer Anwendungsbereich für solche Adsorptionsfilter ist insbesondere die Verwendung in Kraftfahrzeugen als Filter für die Innenraumluft. Andere Anwendungsbereiche sind z. B. die Verwendung bei der Herstellung von Schutzanzügen und Einlegesohlen oder die Verwendung als Abluftfilter im Haushaltsbereich.

Aus dem Stand der Technik sind eine Reihe verschiedener Adsorptionsfilter und Verfahren zu deren Herstellung bekannt. Diese aus dem Stand der Technik bekannten Adsorptionsfilter lassen sich grundsätzlich in solche unterteilen, bei denen Adsorberpartikel innerhalb einer Vlies- oder Faser- bzw. Schaumschicht angeordnet sind, und in solche, bei denen Adsorberpartikel auf einer Schicht eines Partikelfilters oder zwischen zwei derartigen Schichten angeordnet sind.

Aus der DE 37 19 415 A1 ist z. B. ein Filterelement mit einem offenporigen Schaumträger und Adsorberpartikeln bekannt. Abgesehen von der aufwendigen Herstellungsweise ist ein derartiges Filterelement darin nachteilig, daß die auftragbare Adsorbermenge und damit die Kapazität durch die Porengröße des Schaumträgers begrenzt ist. Ein höheres Flächengewicht des Filters kann nur über eine größere Dicke der Schaummatrix erreicht werden, was eine schlechtere Luftdurchlässigkeit, d. h. einen erhöhten Druckabfall am Filter, zur Folge hat. Auch stellt die gleichmäßige Einbringung der Adsorberpartikel ein gewisses Problem dar, wobei die DE 37 19 415 A1 auch die Verwendung von Bindemitteln zur Immobilisierung der Adsorberpartikel offenbart. Ein weiterer großer Nachteil von Filtern der beschriebenen Art ist darin zu sehen, daß eine Plissierung, die bei der Herstellung von Kombifiltern unerläßlich ist, aufgrund der Stärke der eingesetzten Schäume nur schlecht möglich ist.

In der DE-AS 25 02 096 ist ein Adsorptionsfilter offenbart, bei dessen Herstellung Adsorberpartikel während des Legens des Vlieses in selbiges eingebracht werden und ausschließlich mechanisch, d. h. ohne Bindemittel oder Kleber zwischen den Kreuzungspunkten der zur Vliesherstellung verwendeten Fasern gehalten werden. So hergestellte Adsorptionsfilter weisen jedoch eine Reihe von Nachteilen auf. Zum einen muß das Vlies eine gewisse Mindestdichte aufweisen damit ein Herausfallen der Adsorberpartikel weitgehend vermieden wird, wobei ein Herausfallen von Adsorberpartikeln bei mechanischer Belastung, z. B. durch Vibrationen oder, bei der Verwendung zur Herstellung eines Schutzanzugs, beim Tragen desselben nicht ganz vermieden werden kann. Insbesondere bedingt die erforderliche Dichte des Vlieses einen Druckabfall am Filter, der möglichst zu vermeiden ist.

Die DE-AS 125 41 27 offenbart eine Filterschicht, bei der Adsorberpartikel mit einem geeigneten Bindemittel, das gegebenenfalls härtbar ist, im Vlies fixiert werden. Hierzu wird eine entsprechende Vliesbahn mit einem Bindemittel besprüht und nachfolgend werden die Adsorberpartikel auf das Vlies aufgebracht und durch das Einwirken eines Vibrationssiebs in der Vliesschicht verteilt. Nachteilig ist hierbei, daß eine gleichmäßige Verteilung der Adsorberpartikel innerhalb der Vliesschicht, wenn überhaupt, nur mit hohem Aufwand zu erreichen ist, weil die zuerst auf das mit dem Bindemittel versehene Vlies auftreffenden Adsorberpartikel sofort an den Vliesfasern haften und ein weiteres Eindringen von Adsorberpartikeln in das Vlies zumindest stark behindern. Es ist weiterhin nicht auszuschließen, daß die Adsorptionsleistung eines derartigen Filters vergleichsweise stark eingeschränkt ist, weil ein großer Teil der Oberfläche der Adsorberpartikel mit Bindemittel benetzt wird und somit nicht mehr für die Adsorption zur Verfügung steht.

Ein ähnlicher Filter wie der zuvor beschriebene ist aus der US 5,124,177 bekannt. Bei der Herstellung des Filters gemäß der US 5,124,177 wird eine Vliesbahn ebenfalls zuerst mit einem Bindemittel besprüht und nachfolgend werden Adsorberpartikel auf das Vlies aufgebracht und in dieses mechanisch eingearbeitet. Optional ist danach eine weitere Sprühbeschichtung mit einem Bindemittel vorgesehen. Dieser Filter weist dementsprechend die gleichen Nachteile wie der vorstehend beschriebene auf, wobei aber bei der Ausgestaltung des Verfahrens mit einem zweiten Aufbringen von Bindemittel die Adsorptionsleistung weiter herabgesetzt wird. Weiterhin ist im Verhältnis zur Masse der Adsorberpartikel eine große Menge an Bindemittel zur dauerhaften Fixierung der Adsorberpartikel erforderlich.

Ein textiler Flächenfilter mit Adsorptionseigenschaften, der kein zusätzliches Bindemittel der vorstehend beschriebenen Art enthält, ist Gegenstand der DE 32 00 959 A1. Bei diesem Filter werden Adsorberpartikel in ein Vlies eingebracht, das Fasern enthält, die bei erhöhter Temperatur vorübergehend klebrig werden ohne zu schmelzen. Als derartige Fasern sind dabei heterophile Fasern aus zwei koaxial angeordneten Komponenten, von denen die äußere einen niedrigeren Schmelzpunkt aufweist, und unverstreckte amorphe Polyesterfasern offenbart. Bei der Herstellung dieses Filters wird zuerst ein Vlies aus den entsprechenden Fasern gebildet, anschließend werden die Adsorberpartikel in das Vlies eingearbeitet und letztendlich werden die Adsorberpartikel durch Erwärmen des Vlieses und anschließendes Abkühlen an den Fasern fixiert. Nachteilig hierbei ist sowohl die aufwendige Herstellung des Filters als auch die vergleichsweise hohe Benetzung der Oberfläche der Adsorberpartikel an den Kontaktstellen zu den fixierenden Fasern, wobei ein Adsorberpartikel im allgemeinen an mehreren Fasern fixiert wird. Darüber hinaus sind die verwendeten Bindefasern vergleichsweise teuer.

Aus dem Stand der Technik sind abschließend noch die GB 2 077 141 A, DE 38 13 564 A1, DE 40 34 798 C2 und EP 0 818 230 A1 zu erwähnen, die jeweils Filter mit Adsorptionseigenschaften betreffen, bei denen wenigstens eine Schicht von Adsorberpartikeln auf der Oberfläche eines Substrats, z. B. eines Vlieses, mit einem Bindemittel fixiert ist. Bei diesen Filtern ist insbesondere nachteilig, daß eine relativ hohe Menge an Bindemittel erforderlich ist, wobei gleichzeitig die Adsorptionskapazität aufgrund der Benetzung der Oberfläche der Adsoberpartikel mit dem jeweiligen Bindemittel zu wünschen übrig läßt. Für die praktische Anwendung ist weiterhin im allgemeinen das Vorsehen einer weiteren Lage eines Vliesmaterials erforderlich, damit sich Adsorberpartikel bei mechanischer Belastung nicht vom Substrat lösen.

Die US 4,948,639 offenbart einen Staubsangerbeutel mit Faser- und Partikalmaterial sowie eine Vorrichtung zur Herstellung desselben.

Angesichts der aus dem Stand der Technik bekannten Filtermaterialien mit Adsorptionseigenschaften und den mit diesen verbundenen Nachteilen besteht weiterhin das Bedürfnis nach einem verbesserten Filtermaterial, das die aus dem Stand der Technik bekannten Nachteile möglichst weitgehend vermeidet, und wirtschaftlich herstellbar ist. Das Bereitstellen einer derartigen Flächenware, z. B. zur Verwendung als Filters, eines Verfahrens zu dessen Herstellung sowie einer Vorrichtung zur Durchführung dieses Verfahrens ist daher Aufgabe der vorliegenden Erfindung.

Diese Aufgabe wird durch ein Filtermaterial gemäß Anspruch 1 gelöst.

Der erfindungsgemäße Filter zeichnet sich insbesondere durch eine hohe Adsorptionskapazität Spontanität und eine hohe Luftdurchlässigkeit aus. Dies beruht auf der Tatsache, daß die Adsorberpartikel äußerst kleinflächig an den Schmelzkleberfäden fixiert sind. Die Adsorberpartikel sind ferner in unregelmäßigen Abständen entlang der Faser um ihren gesamten Umfang herum verteilt. Da die Adsorptionsschicht außerdem ausschließlich aus diesen, mit Adsorberpartikeln beladenen Schmelzkleberfäden gebildet ist, die an der Trägerschicht kleben, ist auch keine weitere Fixierung der Adsorptionsschicht mittels eines Bindemittels oder durch Nadeln an der Trägerschicht erforderlich. Die Adsorberpartikel werden bevorzugt von Silicaten, Zeolithen und/oder besonders bevorzugt von Aktivkohle gebildet, welche zur Verleihung von besonderen Adsorptionseigenschaften mit allgemein bekannten Substanzen imprägniert sein können.

Durch das feste Haften der Adsorberpartikel an den Schmelzkleberfäden besteht auch bei der erfindungsgemäßen Ausbildung der Adsorptionsschicht als weitmaschiges, regelloses dreidimensionales Netz nicht die Gefahr, daß sich Adsorberpartikel aus der Adsorptionsschicht lösen. Gleichzeitig wird durch diese Ausbildung der Adsorptionsschicht eine hohe Luftdurchlässigkeit bei hoher Adsorptionskapazität und hoher Spontanität ermöglicht.

Als Trägerschicht können grundsätzlich alle auf dem vorliegenden Gebiet gängigen Materialien Verwendung finden, wobei ein Spunbond-Material auf Polyester-, Polyolefin-, Polycarbonat-, Polyurethan- oder Polyamidbasis oder aus retikuliertem PUR-Schaum bevorzugt ist. Als Schmelzkleber sind ebenfalls Materialien auf Polyester-, Polyolefin-, Polycarbonat-, Polyurethan- oder Polyamidbasis bevorzugt, wobei die Schmelzkleberfäden der Adsorptionsschicht bei dem erfindungsgemäßen Filter besonders bevorzugt polymereinheitlich zu der Trägerschicht sind, weil hierdurch ein besonders einfaches und kostengünstiges Recycling des Filters möglich ist.

Die Menge an Adsorberpartikeln, die in der Adsorberschicht enthalten sind beträg 300 g/m² bis 3500 g/m², bevorzugt 300 bis 1500 g/m².

Für bestimmte Anwendungszwecke, bei der der Filter z. B. einer besonders starken mechanischen Belastung unterliegt, ist es bevorzugt auf der von der Trägerschicht abgewandten Seite der Adsorberschicht eine Deckschicht vorzusehen. Diese Deckschicht besteht dann aus einem Vlies, Gelege, Gewirk oder Gestrick und ist besonders bevorzugt aus einem Material gefertigt, das polymereinheitlich zu dem Material der Trägerschicht und/oder dem Schmelzkleber bew. den Schmelzkleberfäden ist.

Die Adsorberpartikel sind allgemein von sphärischer und/oder regelloser, d. h. beliebiger Form und besitzen einen Durchmesser im Bereich von 0,05 bis 2 mm. Die hohe Adsorptions kapazität des Filters wird ferner dadurch erreicht, daß der Durchmesser der Adsorberpartikel im Bereich von 0,05 bis 2 mm liegt, wodurch ein günstiges Verhältnis von der adsorbierenden Oberfläche zur Masse der Adsorberpartikel gegeben ist.

Die Schmelzkleberfäden bestehen aus einem Schmelzkleber, der vorteilhafterweise einen Erweichungsbereich zwischen 75 und 200°C besitzt, insbesondere zwischen 100 und 150 °C. Derartige Temperaturen sind bei der Verarbeitung leicht und mit geringem Energieeinsatz zu erreichen. Da die Temperaturbeständigkeit des erfindungsgemäßen Filters durch seine Erweichungstemperatur begrenzt ist, ist auch der Einsatz eines nachvernetzenden Schmelzklebers möglich, falls der Filter in einer Umgebung mit entsprechend erhöhter Temperatur eingesetzt werden soll.

Die Schmelzkleberfäden besitzen erfindungsgemäß einen Durchmeser der mindestens um den Faktor 10 kleiner ist als der Durchmesser der Adsorberpartikel. Hierdurch wird der Vorteil erhalten, daß die Schmelzkleberfäden tatsächlich nur mit äußerst geringer räumlicher Ausdehnung mit den Adsorberpartikeln in Kontakt stehen. Ferner ermöglicht dies einen besonders geringen Anteil an Schmelzkleber in dem erfindungsgemäßen Filter, der zwischen 2 und 10 Gew. % liegt, insbesondere zwischen 2,5 und 5 Gew. %, so daß die Adsorptionsschicht im wesentlichen von dreidimensional im Raum angeorndeten Adsorberpartikeln besteht, deren Oberflächen zum weitaus größten Teil frei für das den Filter durchstöhmende Medium zugänglich sind. Dadurch besitzt das Filtermaterial sehr gute kinetische Eigenschaften.

In einer besonderen Ausgestaltung besteht das Material der Trägerschicht aus einem Heißklebernetz oder -vlies. Auf diese Weise ist z. B. die von der Adsorberschicht abgewandte Seite der Trägerschicht punktuell oder auf kleinen Flächen an anderen Gegenständen zu befestigen, wie z. B. Filterrahmen, Gittern oder dergleichen.

Durch Anordnung einer weiteren filternden Lage auf der Adsorberschicht besteht auch die Möglichkeit den erfindungsgemäßen Filter mit weiteren Filtereigenschaften, wie z. B. mit Hilfe eines Partikelfilters, zu versehen. Unabhängig davon kann die Trägerschicht natürlich auch über filternde Eigenschaften verfügen.

Die vorliegende Aufgabe wird weiterhin durch ein Verfahren zur Herstellung des vorbeschriebenen Filters gelöst, bei dem wenigstens ein Schmelzkleberfaden aus wenigstens einer Düse in Richtung eines beabstandet an der wenigstens einen Düse entlang geführten Trägervlieses gesponnen wird, wobei das Beladen des wenigstens einen Schmelzkleberfadens mit Adsorberpartikeln im Bereich des Abschnitts zwischen der Düse und dem Trägervlies erfolgt und dieser wenigstens eine, mit Adsorberpartikeln beladene Schmelzkleberfaden nachfolgend auf das Trägervlies auftrifft und stellenweise an diesen haftet.

Bei dem erfindungsgemäßen Verfahren wird der wenigstens eine Schmelzkleberfaden mit Druck durch eine Einzeldüse oder einen Einzelspalt, der einzeln, in Reihe oder wirr auf einem Spinnkopf angeordnet sein kann, ausgesponnen. Hierbei ist es bevorzugt, wenn das Aufsprühen des/der Schmelzkleberfäden auf einer Breite erfolgt, die der der Trägerschicht entspricht. Zur Verfeinerung der Faser wird um den Faseraustritt herum oder seitlich Sprühluft in Form von wenigstens einem Luftstrom zugeführt. Hierdurch wird die Faser verstreckt. Erfindungsgemäß werden der/den so erzeugten Fasern, die in einer gewissen Entfernung zur Austrittsstelle aus der wenigstens einen Düse noch klebrig sind, Adsorberpartikel zugeführt, die an der oder den Fasern haften bleiben. Die Zufuhr der Adsorberpartikel erfolgt bevorzugt über einen Rüttler, wobei die zur Verstreckung der Faser erzeugte Sekundärluft einen Jet-Effekt ausübt und dazu führt, daß die in diesem Luftstrom einrieselnden Adsorberpartikel entlang des bzw. der versprühten Schmelzkleberfäden haften bleiben.

Die mit Adsorberpartikeln beladenen Schmelzkleberfäden treffen nun auf die vorbeigeführte Trägerschicht auf und werden dabei auf einem durch die Primärluft erzeugten Luftpolster auf der Flächenware abgelegt, wobei unbelegte Faserstellen automatisch eine Verbindung mit dem Träger herstellen, d. h. an dem Träger haften. Durch das Luftpolster aus der Primärluft ist ferner sichergestellt, daß es zu keinem zu dichten Verbund zwischen Fasern und Adsorbern kommt. Die Adsorberpartikel sind vielmehr in einer Art lockerem, dreidimensionalen Fasernetz aufgehängt.

Damit die Ablage der mit Adsorberpartikel beladenen Schmelzkleberfäden möglichst gleichförmig erfolgt, wird bevorzugt eine Schlitzdüse verwendet, die zweckmäßigerweise die gesamte Breite der Trägerschicht überdeckt. Die bei dem Versprühen der Faser eingesetzte Primär- und Sekundärluft ist allerdings für eine gleichförmige Ablage der beladenen Schmelzkleberfäden störend. Es ist daher bevorzugt, die Trägerschicht an der Ablagestelle in Form einer konvex gekrümmten Bahn zu führen, weil auf diese Weise die anströmende Luft abgeführt wird und sich, wenn überhaupt, nur minimale Verwirbelungen im Ablagebereich bilden. Besonders vorteilhaft, da einfach und variabel zu realisieren, werden zur Führung der Trägerschicht in ihrer Höhe und gegebenenfalls seitlich verstellbare Walzen verwendet, die eine einfache Anpassung der Geometrie des Verlaufs der Trägerschichtbahn ermöglichen. Durch die vorstehend beschriebenen Maßnahmen wird ein gleichmäßiges Auftragen der Adsorberschicht auf der Trägerschicht ermöglicht und das Kalandrieren des Filterelements kann entfallen, wodurch die vorteilhafte, lose dreidimensionale Struktur erhalten bleibt.

Besonders vorteilhaft ist ferner, daß mit dem erfindungsgemäßen Verfahren die auftragbare Adsorbermenge sowie die Adsorberschichtdicke frei einstellbar ist. Es ist z. B. der Auftrag einer Adsorbermenge pro Auftragevorrichtung von bis zu 3500 g/m² problemlos möglich, wobei gleichzeitig geringe Schichtdicken von bis zu wenigstens 1,5 mm herstellbar sind, die bei vergleichbarer Adsorbermengenauftragung sonst nur durch Kalandrieren erreicht werden können.

Überschüssige, nicht fixierte Adsorberpartikel lassen sich an Punkten, die die Strömungsverhältnisse der Luft am Ablageort nicht beeinflussen, absaugen, so daß keine Partikelemission in die Umgebung erfolgt. Zu einem noch besseren Schutz der strömungsmechanischen Verhältnisse am Ablageort und zur sicheren Vermeidung von Partikelemissionen in die Umgebung kann weiterhin eine Abkapselung der Vorrichtung bzw. eines Teils der Vorrichtung vorgesehen sein.

Das erfindungsgemäße Verfahren erlaubt weiterhin aufgrund der gleichförmigen Ablage Produktionsgeschwindigkeiten von bis zu 50 m/min. bei einer üblichen Belegung der Adsorberschicht von 500 g/m². Die Adsorberschicht kann in einem nachfolgenden Arbeitsschritt, d. h. auch "online", mit einer Deckschicht, z. B. einem Faservlies, belegt bzw. kaschiert werden. Auch hier reichen die vorhandenen freien Stellen der Schmelzkleberfäden zur Anbindung des Materials aus. Ein weiterer, erheblicher Vorteil des so hergestellten Filters liegt darin, daß dieser problemlos zugeschnitten, plissiert oder aufgerollt werden kann und in vielen Bereichen einsetzbar ist. Das erfindungsgemäße Herstellungsverfahren erweist sich somit als sehr effizient, qualitativ hochwertig und äußerst wirtschaftlich.

Die eingangs gestellte Aufgabe wird abschließend weiterhin durch eine Vorrichtung zur Durchführung des vorbeschriebenen Verfahrens gemäß Anspruch 27 gelöst.

Die erfindungsgemäße Vorrichtung ermöglicht mit konstruktiv wenig aufwendigen Maßnahmen eine besonders einfache Herstellung des erfindungsgemäßen Filters. Der Winkel α des Sprühkopfes beträgt dabei 20 bis 45°, insbesondere 20 bis 35 °, weil hierdurch ein Fixieren der Adsorberpartikel an den austretenden Schmelzkleberfäden möglich ist, ohne daß überschüssige Adsorberpartikel an der Ablagestelle auf die Trägerschicht auftreffen und möglicherweise lose in der Adsorberschicht verbleiben. Hierbei kann die erfindungsgemäße Vorrichtung auch so ausgestaltet sein, daß sich senkrecht unterhalb der Austrittsöffnung der Zuführeinrichtung für die Adsorberpartikel keine Trägerschichtbahn befindet. Selbstverständlich ist es aber auch möglich das Auftreffen von überschüssigen Adsorberpartikeln auf die Trägerschicht vor der Ablagestelle z. B. durch das Vorsehen eines Ableitblechs in Kombination mit einer Absaugeinrichtung oder ausschließlich durch eine ausreichend wirksame Absaugeinrichtung vorzusehen.

In einer besonderen Ausgestaltung der erfindungsgemäßen Vorrichtung weist diese eine Ablagestelle für den/die mit Adsorberpartikeln beladenen Schmelzkleberfäden auf, 1 an der das Trägervlies auf seinem Transportweg die kürzeste Entfernung zum Sprühkopf durchläuft, wobei diese Entfernung, d. h. der Abstand a, 5 bis 20 cm beträgt, insbesondere 8 bis 12 cm, weil die Schmelzkleberfäden dann beim Auftreffen auf die Trägerschicht noch ein für ein Anhaften an derselben ausreichendes Haftvermögen aufweisen. Um eine möglichst gleichförmige Ablage der mit Asorberpartikeln beladenen Schmelzkleberfäden zu ermöglichen ist die Ablagestelle bevorzugt mit einer konvex gekrümmten Geometrie ausgebildet, wobei diese insbesondere durch eine Walze gebildet ist, die Teil der Transporteinrichtung ist.

Bei den beigefügten Figuren handelt es sich allgemein um schematische Darstellungen, die der Erläuterung der Erfindung dienen und deren Maßstab und Größenverhältnisse nicht ohne weiteres auf den tatsächlichen Erfindungsgegenstand übertragen werden können. Es zeigen:
- Fig. 1: eine schematische Darstellung eines mit Adsorberpartikeln beladenen Schmelzkleberfadens, wie er in dem erfindungsgemäßen Filter enthalten ist.
- Fig. 2: eine schematische Darstellung eines Querschnitts des erfindungsgemäßen Filters; und
- Fig. 3: eine schematische Darstellung der erfindungsgemäßen Vorrichtung zur Herstellung des erfindungsgemäßen Filters.
- Fig. 4: eine rasterelektronenmikroskopische Aufnahme der Adsorberschicht des erfindungsgemäßen Filtermaterials.

Bezugnehmend auf die beigefügten Figuren wird die Erfindung nun in Form von Ausführungsbeispielen näher erläutert:

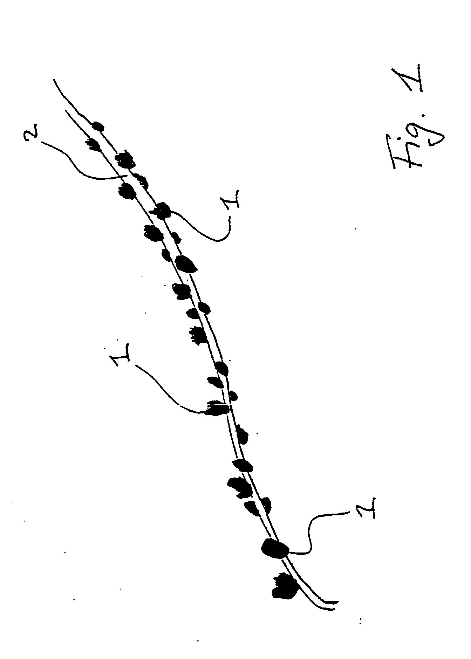

In Fig. 1 ist ein mit Adsorberpartikeln 1 beladener Schmelzkleberfaden 2 im Ausschnitt schematisch dargestellt. Die Darstellung ist stark vereinfacht und zeichnet sich insbesondere durch eine übertrieben große Darstellung des Schmelzkleberfadens aus.

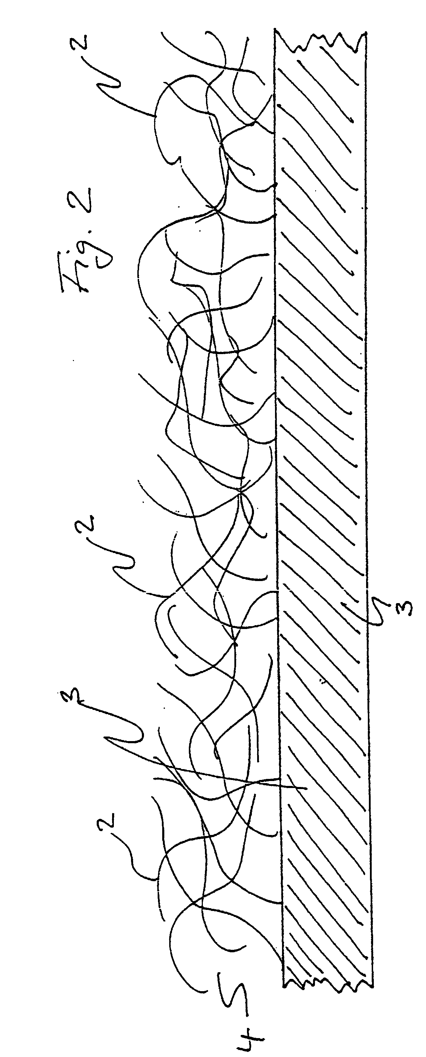

In Fig. 2 ist der erfindungsgemäße Filter, wiederum im Ausschnitt, schematisch und stark vereinfacht dargestellt. Die mit Adsorberpartikeln beladenen Schmelzkleberfäden 2 sind dabei in Form eines weitmaschigen, regellosen dreidimensionalen Netzes auf einer Trägerschicht 3 angeordnet und bilden insgesamt die Adsorptionsschicht 4.

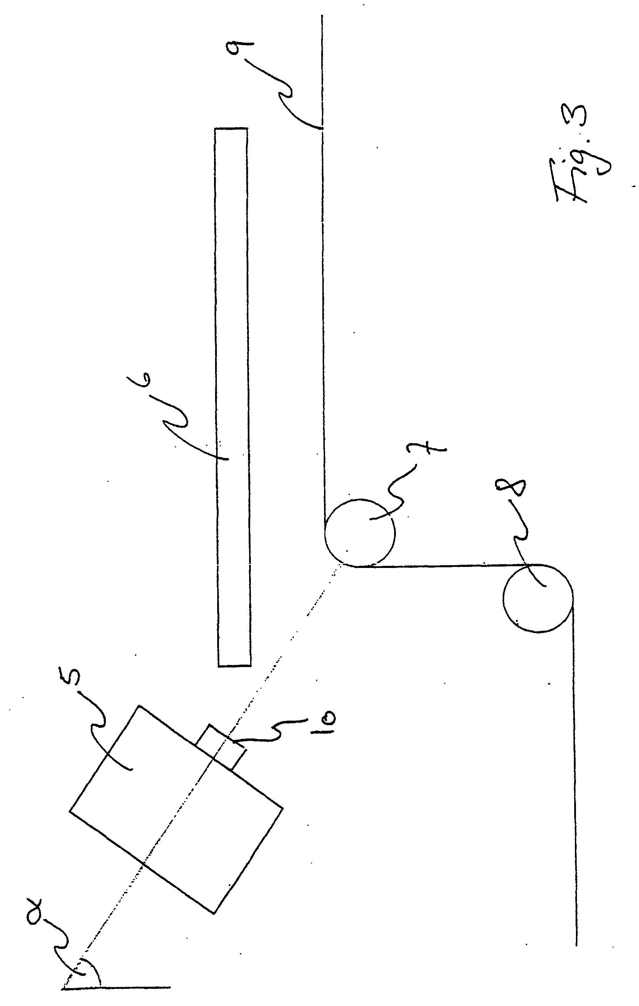

Fig. 3 zeigt eine ebenfalls stark vereinfachte Darstellung der erfindungsgemäßen Vorrichtung zur Herstellung des erfindungsgemäßen Vlieses. Der Darstellung sind insbesondere der Sprühkopf 5 die Zuführeinrichtung für partikuläres Material 6, die durch Walzen 7, 8 gebildete Transporteinrichtung und die Trägervliesbahn 9 zu entnehmen. Der Sprühkopf 5 ist dabei in einem Winkel α zur Lotrechten, in der vorliegenden Figur 45°, angeordnet. Aus der Austrittsöffnung 10 des Sprühkopfs 5 werden unter Druck Schmelzkleberfäden in Richtung auf die über die Walze 7 verlaufende Trägervliesbahn 9 extrudiert. Diese Schmelzkleberfäden werden mit einem nicht dargestellten, auf die Walze 7 gerichteten Luftstrom (Jet-Effekt) nachverstreckt. Gleichzeitig treten Adsorberpartikel an der zum Sprühkopf gerichteten Seite der Zuführeinrichtung für partikuläres Material 6 aus, wobei sie durch die Schwerkraft nach unten fallen und zum Teil direkt auf die klebrigen Schmelzkleberfäden auftreffen und zum anderen Teil in den Sekundärluftstrom eintreten und entlang der Faser verteilt werden.

An der Position der Walze 7 verläuft die Trägervliesbahn in einer konvex gekrümmten Bahn und an dieser Stelle treffen die mit Adsorberpartikeln beladenen Schmelzkleberfäden auf die Trägervliesbahn auf und bleiben an dieser haften. Wenn die Zuführeinrichtung für partikuläres Material 6 durch einen Rüttler oder ein Schwingelement gebildet wird, befindet sich die zum Sprühkopf gerichtete Abwurfkante in einem Radius von 3 bis 10 cm von der Austrittsöffnung 10 des Sprühkopfes entfernt und ist bezüglich der Positionierung, der Schwingfrequenz und der Schwingamplitude frei enstellbar, wodurch die einzudosierende Adsorberpartikelmenge reguliert wird. Ein derartiges Schwingelement wird aus einem nicht gezeigten Vorratsbehälter mit Adsorberpartikeln befüllt, wobei die auf das Schwingelement aufgegebene Menge über die Auslaßschlitzgröße des Behälters reguliert werden kann.

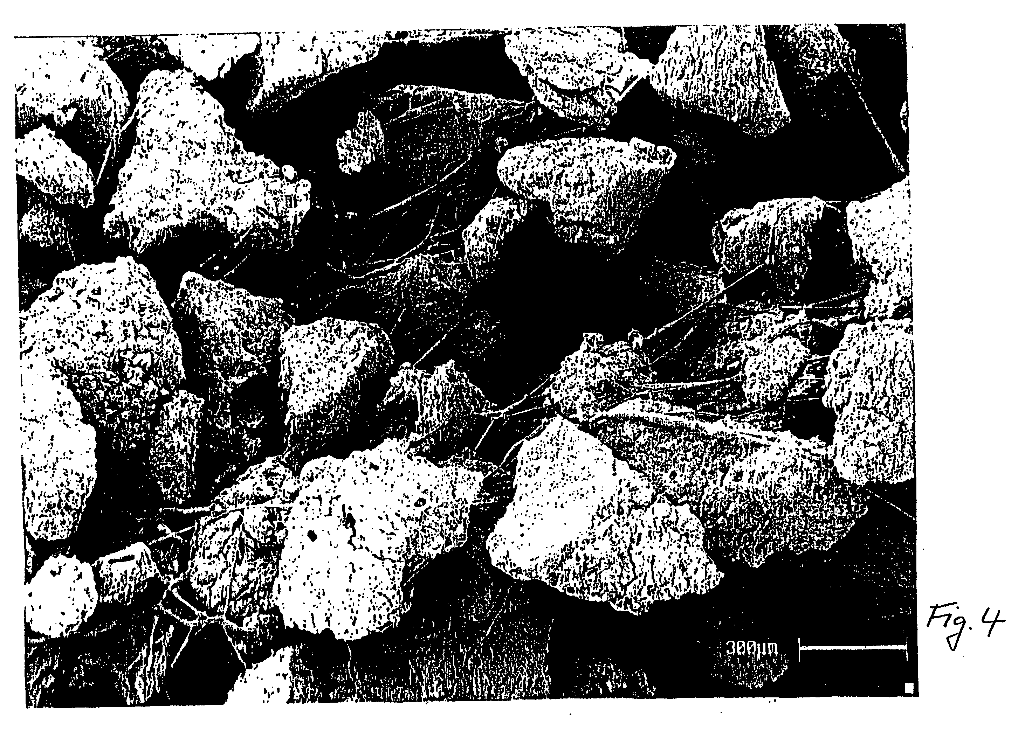

Fig. 4 zeigt eine rasterelektronenmikroskopische Aufnahme der Adsorberschicht des erfindungsgemäßen Filtermaterials, der unschwer die Schmelzkleberfäden und die Adsorberpartikel zu entnehmen sind, ebenso die Tatsache, der in der vorliegenden Aufnahme unregelmäßig geformten Adsorberpartikel, frei von Schmelzkleber ist und somit für die Adsorption zur Verfügung steht.

### Beispiel:

In einem herkömmlichen Thermoplastenschmelzgerät wird ein Schmelzklebstoff auf Basis von Polyolefinen auf 180 bis 190 °C erwärmt. Der geschmolzene Thermoplast wird einer Breitschlitzdüse zugeführt, aus der er in einer Breite von 25 cm mit 180 bis 190 °C heißer Druckluft bei 2,5 bis 3,0 bar mit einer Rate von 150 g/min, extrudiert wird. Die Primärluft zergliedert das geschmolzene Polyolefingemisch dabei in Thermoplastenfäden mit einem Durchmesser von ca. 10 µm.

Ca. 2 cm hinter dem Austrittsschlitz der Düse wird ein Aktivkohlegranulat von 0,600 mm X 0,212 mm (30 X 70 mesh) mit einer Förderrate von 5 kg/min. über ein regelbares Schwingelement eindosiert. Die so auf den Thermoplasten aufgezogenen Aktivkohlepartikel zerreißen aufgrund ihres Gewichtes die Thermoplastenfäden in Stücke. Die mit den Aktivkohlepartikeln beladenen Fasern werden auf einem Luftdurchlässigen Spunbond-Trägervlies abgelegt, das mit einer Geschwindigkeit von 20 m/min, unter der Düse entlang geführt wird.

Die Heranführung des Spunbond-Trägervlieses erfolgt Stufenförmig über ein 2-Walzensystem, so daß die schräg extrudierten Thermoplastenfäden ungefähr im rechten Winkel auf das Trägervlies treffen. Die Neigung des Sprühkopfes beträgt im Ausführungsbeispiel 30°.

Das mit diesem Verfahren erzeugte Produkt besteht aus einem Luftdurchlässigen Spunbond-Trägervlies. Darauf ist ein regelloses, weitmaschiges Netz aus fadenförmigen thermoplastischen Polyolefinen an dem perlenkettenförmig Aktivkohlepartikel aufgezogen sind, aufgesprüht. Das verwendete Aktivkohlegranulat besitzt ein Körnung von 30 X 70 mesh. Die aufgetragene Aktivkohlemenge beträgt im Ausführungsbeispiel ca. 800 g/m² bei einem Polyolefinanteil von ca. 35 g/m² . Das gesamte Filtermaterial besitzt ein Flächengewicht von 905 g/m² + 20 g/m². Die nach dem obigen Verfahren hergestellte Flächenware erreicht eine Dicke von 2,5 mm + 0,3 mm. Das flächenförmige Filtermaterial besitzt einen Druckabfall von 180 Pa + 20 Pa bei einem Volumenstrom von 1,35 m/s.

## Patentansprüche

1. Filtermaterial, insbesondere in der Form von Flächenware, für fluide Medien mit einer Trägerschicht (3) und einer Adsorptionsschicht (4), wobei die Adsorptionsschicht (4) von mit Adsorberpartikeln (1) beladenen Schmelzkleberfäden (2) gebildet ist,
**dadurch gekennzeichnet,**
**daß** der Schmelzldeberanteil 2 bis 10 Gew.-% der Masse der Adsorptionsschicht (4) und der Trägerschicht (3) beträgt und das Filtermaterial ferner von 300g/m² bis 3500g/m² Adsorberpartikel enthält.

2. Filtermaterial gemäß Anspruch 1,
**dadurch gekennzeichnet, daß** die Adsorberpartikeln (1) von Silicaten, Zeolithen und/oder insbesondere von Aktivkohle gebildet sind.

3. Filtermaterial gemäß Anspruch 1 oder 2,
**dadurch gekennzeichnet, daß** die mit Adsorberpartikeln (1) beladenen Schmelzkleberfäden (2) geringflächig an der Trägerschicht (3) haften.

4. Filtermaterial gemäß einem der vorhergehenden Ansprüche,
**dadurch gekennzeichnet, daß** die mit Adsorberpartikeln (1) beladenen Schmelzkleberfäden (2) ein weitmaschiges, regelloses dreidimensionales Netz bilden.

5. Filtermaterial gemäß einem der vorhergehenden Ansprüche,
**dadurch gekennzeichnet, daß**
die Trägerschicht aus einem Vlies, Gelege, Gewirke. oder Gestrick besteht.

6. Filtermaterial gemäß einem der vorhergehenden Ansprüche,
**dadurch gekennzeichnet, daß**
die Trägerschicht (3) aus einem Vlies auf Polyester-, Polyolefin-, Polycarbonat-, Polyurethan- oder Polyamidbasis oder aus retikuliertem PUR-Schaum gebildet ist.

7. Filtermaterial gemäß einem der vorhergehenden Ansprüche,
**dadurch gekennzeichnet, daß**
der Schmelzkleber aus einem Material auf Polyester-, Polyolefin-, Polycarbonat-, Polyurethan- oder Polyamidbasis besteht, wobei der Schmelzkleber insbesondere polymereinheitlich zu der Trägerschicht (3) ist.

8. Filtermaterial gemäß einem der vorhergehenden Ansprüche,
**dadurch gekennzeichnet, daß**
der Schmelzkleber ein reaktiver, kaltvernetzender Schmelzkleber, insbesondere auf Polyurethanbasis ist.

9. Filtermaterial gemäß einem der vorhergehenden Ansprüche,
**dadurch gekennzeichnet, daß**
die Adsorberpartikel (1) in einer Menge von bis zu 3500 g/m² in der Adsorberschicht (1) enthalten sind, insbesondere in einer Menge im Bereich von 300 bis 1500 g/m².

10. Filtermaterial gemäß einem der vorhergehenden Ansprüche,
**dadurch gekennzeichnet, daß**
die Adsorberschicht (1) auf der von der Trägerschicht (3) abgewandten Seite mit einer Deckschicht versehen ist.

11. Filtermaterial gemäß Anspruch 10,
**dadurch gekennzeichnet, daß**
die Deckschicht aus einem Vlies, Gelege, Gewirk oder Gestrick besteht.

12. Filtermaterial gemäß Anspruch 10 oder 11,
**dadurch gekennzeichnet, daß**
das Material der Deckschicht polymereinheitlich zu dem Material der Trägerschicht und/oder dem Schmelzkleber ist.

13. Filtermaterial gemäß einem der vorhergehenden Ansprüche,
**dadurch gekennzeichnet, daß**
die Adsorberpartikel (1) von sphärischer und/oder regelloser Form sind und einen Durchmesser im Bereich von 0,05 bis 2 mm besitzen.

14. Filtermaterial gemäß einem der vorhergehenden Ansprüche,
**dadurch gekennzeichnet, daß**
der Schmelzkleber einen Erweichungsbereich zwischen 75 und 200 °C besitzt, insbesondere zwischen 100 und 150 °C.

15. Filtermaterial gemäß einem der vorhergehenden Ansprüche,
**dadurch gekennzeichnet, daß**
der Durchmesser der Schmelzkleberfäden (2) mindestens um den Faktor 10 kleiner ist als der Durchmesser der Adsorberpartikel (1).

16. Filtermaterial gemäß einem der vorhergehenden Ansprüche,
**dadurch gekennzeichnet, daß**
der Schmelzkleber anteil der Adsorptionsschicht (4) zwischen 2,5 und 5 Gew. % liegt.

17. Filtermaterial gemäß einem der vorhergehenden Ansprüche,
**dadurch gekennzeichnet, daß**
das Trägermaterial aus einem Heißklebernetz oder - vlies besteht.

18. Filtermaterial gemäß einem der vorhergehenden Ansprüche,
**dadurch gekennzeichnet, daß**
auf der Adsorberschicht (1) eine weitere, filternde Lage angeordnet ist.

19. Verfahren zur Herstellung eines Filtermaterials gemäß einem der vorhergehenden Ansprüche,
**dadurch gekennzeichnet, daß**
wenigstens ein Schmelzkleberfaden aus wenigstens einer Düse in Richtung eines beabstandet an der wenigstens einen Düse entlang geführten Trägervlieses versprüht wird, wobei das Beladen des wenigstens einen Schmelzkleberfadens mit Adsorberpartikeln im Bereich des Abschnitts zwischen der Düse und dem Trägervlies erfolgt, und dieser wenigstens eine mit Adsorberpartikeln beladene Schmelzkleberfaden nachfolgend auf das Trägervlies auftrifft und geringflächig daran haftet.

20. Verfahren gemäß Anspruch 9,
**dadurch gekennzeichnet, daß**
das Versprühen der Schmelzkleberfäden auf einer Breite erfolgt, die der der Trägerschicht entspricht.

21. Verfahren gemäß Anspruch 19 oder 20,
**dadurch gekennzeichnet, daß**
der Schmelzkleber unter Druck aus einer Einzel- oder Schlitzdüse extrudiert wird, wobei um den Schmelzkleberaustritt herum oder seitlich davon wenigstens ein Luftstrom zum Verstrecken der wenigstens einen Faser zugeführt wird.

22. Verfahren gemäß einem der Ansprüche 19 bis 21,
**dadurch gekennzeichnet, daß**
die Zufuhr der Adsorberpartikel über einen Rüttler erfolgt.

23. Verfahren gemäß einem der Ansprüche 19 bis 22,
**dadurch gekennzeichnet, daß**
das Trägervlies im Bereich des Auftreffens des wenigstens einen mit Adsorberpartikeln beladenen Schmelzkleberfadens auf einer konvex gekrümmten Bahn geführt wird.

24. Verfahren gemäß einem der Ansprüche 19 bis 23,
**dadurch gekennzeichnet, daß**
der Schmelzkleber vor dem Versprühen auf eine Temperatur von 20 bis 50 °C über seinen Schmelzbereich (Erweichungspunkt) erwärmt und mittels heißer Druckluft von gleicher Temperatur versprüht wird.

25. Verfahren gemäß Anspruch 24,
**dadurch gekennzeichnet, daß**
die heiße Druckluft den Schmelzkleber mit einem Druck im Bereich von 2 bis 5 bar beaufschlagt.

26. Verfahren gemäß einem der Ansprüche 19 bis 25,
**dadurch gekennzeichnet, daß** g der Schmelzkleber mit einer Rate von 100 bis 200 g/min. aufgesprüht wird, insbesondere mit einer Rate von 125 bis 175 g/min.

27. Vorrichtung zur Durchführung des Verfahrens gemäß einem der Ansprüche 19 bis 26,
**dadurch gekennzeichnet, daß**
ein Sprühkopf (5) mit wenigstens einer Düse in einem Abstand a vom Verlauf einer Trägervliesbahn (9) und in einem Winkel α zur Vertikalen angeordnet ist, die Vorrichtung ferner eine Zuführeinrichtung (6) für Adsorberpartikel und eine Transporteinrichtung für ein Trägervlies aufweist, und daß die Austrittstelle der Zuführeinrichtung in einer Entfernung von 1 bis 10 cm von dem Sprühkopf (5) positioniert ist und daβ der Winkel α 20 bis 45° beträgt, so daß die zugeführten Adsorberpartikel an den erzeugten Schmelskleberfäden haften bleiben.

28. Vorrichtung gemäß Anspruch 27,
**dadurch gekennzeichnet, daß**
der Winkel α 25 bis 35° beträgt.

29. Vorrichtung gemäß Anspruch 27 oder 28,
**dadurch gekennzeichnet, daß**
die Vorrichtung eine Ablagestelle für die mit Absorberpartikeln beladenen Schmelzkleberfäden aufweist, an der das Trägervlies auf seinem Transportweg die kürzeste Entfernung zum Sprühkopf (5) durchläuft, und diese Entfernung 5 bis 20 cm beträgt, insbesondere 8 bis 12 cm.

30. Vorrichtung gemäß einem der Ansprüche 27 bis 29,
**dadurch gekennzeichnet, daß**
die Ablagestelle eine konvex gekrümmte Geometrie aufweist und insbesondere durch eine Walze (7) gebildet ist, die Teil der Transporteinrichtung ist.

31. Vorrichtung gemäß einem der Ansprüche 27 bis 30,
**dadurch gekennzeichnet, daß**
die wenigstens eine Düse von einer einzigen Schlitzdüse gebildet ist, die in ihrer Breite der Breite des Trägervlieses entspricht.

32. Vorrichtung gemäß einem der Ansprüche 27 bis 31,
**dadurch gekennzeichnet, daß**
um die wenigstens eine Düse herum oder seitlich davon eine oder mehrere Luftaustrittsdüsen angeordnet sind.

33. Vorrichtung gemäß einem der Ansprüche 27 bis 32,
**dadurch gekennzeichnet, daß**
die Zuführeinrichtung (6) von einem Rüttler gebildet ist.

34. Vorrichtung gemäß einem der Ansprüche 27 bis 33,
**dadurch gekennzeichnet, daß**
eine Absaugeinrichtung für überschüssige Partikel vorgesehen ist.

35. Filter mit Adsorptionseigenschaften,
**dadurch gekennzeichnet, daß**
der Filter ein Filtermaterial gemäß einem der Ansprüche 1 bis 18 enthält.

## Claims

1. Filter material, especially in the form of sheetware, for fluidic media, comprising a carrier layer (3) and an adsorption layer (4), the adsorption layer (4) being formed by melt adhesive threads (2) loaded with adsorber particles (1), **characterized in that** the melt adhesive fraction accounts for 2 to 10% by weight of the mass of the adsorption layer (4) and of the carrier layer (3) and the filter material further contains from 300 g/m² to 3 500 g/m² of adsorber particles.

2. Filter material according to Claim 1, **characterized in that** the adsorber particles (1) are formed of silicates, zeolites and/or especially of activated carbon.

3. Filter material according to Claim 1 or 2, **characterized in that** the melt adhesive threads (2) loaded with adsorber particles (1) adhere to the carrier layer (3) over a minimal area.

4. Filter material according to any of the preceding claims, **characterized in that** the melt adhesive threads (2) loaded with adsorber particles (1) form a widemeshed irregular three-dimensional network.

5. Filter material according to any of the preceding claims, **characterized in that** the carrier layer consists of a fleece, nonwoven scrim, loop-formingly knitted or loop-drawingly knitted fabric.

6. Filter material according to any of the preceding claims, **characterized in that** the carrier layer (3) is formed from a fleece based on polyester, polyolefin. polycarbonate, polyurethane or polyamide or from reticulated PU foam.

7. Filter material according to any of the preceding claims, **characterized in that** the melt adhesive consists of a material based on polyester, polyolefin, polycarbonate, polyurethane or polyamide and in particular is in a relationship of polymer unity with the carrier layer (3).

8. Filter material according to any of the preceding claims, **characterized in that** the melt adhesive is a reactive cold-crosslinking melt adhesive based on polyurethane in particular.

9. Filter material according to any of the preceding claims, **characterized in that** the adsorber particles (1) are present in the adsorber layer (1) in an amount of up to 3 500 g/m² and especially in an amount in the range from 300 to 1 500 g/m².

10. Filter material according to any of the preceding claims, **characterized in that** the adsorber layer (1) is provided with a cover layer on the side removed from the carrier layer (3).

11. Filter material according to Claim 10, **characterized in that** the cover layer consists of a fleece, nonwoven scrim, loop-formingly knitted or loop-drawingly knitted fabric.

12. Filter material according to Claim 10 or 11, **characterized in that** the material of the cover layer is in a relationship of polymer unity with the material of the carrier layer and/or with the melt adhesive.

13. Filter material according to any of the preceding claims, **characterized in that** the adsorber particles (1) are of spherical and/or irregular shape and from 0.05 to 2 mm in diameter.

14. Filter material according to any of the preceding claims, **characterized in that** the melt adhesive has a softening range between 75 and 200°C and especially between 100 and 150°C.

15. Filter material according to any of the preceding claims, **characterized in that** the diameter of the melt adhesive threads (2) is at least 10 times smaller than the diameter of the adsorber particles (1).

16. Filter material according to any of the preceding claims, **characterized in that** the melt adhesive fraction of the adsorption layer (4) is between 2.5 and 5% by weight.

17. Filter material according to any of the preceding claims, **characterized in that** the carrier material consists of a hot-melt adhesive network or fleece.

18. Filter material according to any of the preceding claims, **characterized in that** the adsorber layer (1) has a further, filtering ply disposed on it.

19. Process for producing a filter material according to any of the preceding claims, **characterized in that** at least one melt adhesive thread is sprayed from at least one nozzle in the direction of a carrier fleece led past the at least one nozzle at a distance, the loading of the at least one melt adhesive thread with adsorber particles taking place in the region of the section between the nozzle and the carrier fleece, and this at least one melt adhesive thread loaded with adsorber particles subsequently impinges on the carrier fleece and adheres thereto over a minimal area.

20. Process according to Claim 9, **characterized in that** the spraying of the melt adhesive threads is effected over a width which is equal to that of the carrier layer.

21. Process according to Claim 19 or 20, **characterized in that** the melt adhesive is extruded under pressure from a single hole or slot nozzle, at least one airstream being supplied around or to the side of the melt adhesive outlet to attenuate the at least one fibre.

22. Process according to any of Claims 19 to 21, **characterized in that** the adsorber particles are supplied via a shaker.

23. Process according to any of Claims 19 to 22, **characterized in that** the carrier fleece is led on a convexly curved track in the region of impingement of the at least one melt adhesive thread loaded with adsorber particles.

24. Process according to any of Claims 19 to 23, **characterized in that** the melt adhesive is heated to a temperature from 20 to 50°C above its melting range (softening point) before being sprayed by means of hot compressed air at the same temperature.

25. Process according to Claim 24, **characterized in that** the hot compressed air acts on the melt adhesive at a pressure in the range from 2 to 5 bar.

26. Process according to any of Claims 19 to 25, **characterized in that** the melt adhesive is sprayed at a rate of 100 to 200 g/min and especially at a rate of 125 to 175 g/min.

27. Apparatus for carrying out the process according to any of Claims 19 to 26, **characterized in that** a spray head (5) having at least one nozzle is disposed at a distance a from the course of a carrier fleece track (9) and at an angle α to the vertical, the apparatus further comprises feeding means (6) for adsorber particles and transporting means for a carrier fleece, **in that** the outlet of the feeding means is situated at a distance of 1 to 10 cm from the spray head (5) and **in that** the angle α is 20 to 45°, so that the supplied adsorber particles remain adhering to the melt adhesive threads produced.

28. Apparatus according to Claim 27, **characterized in that** the angle α is 25 to 35°.

29. Apparatus according to Claim 27 or 28, **characterized in that** the apparatus comprises a laydown site for the melt adhesive threads loaded with adsorber particles, at which site the moving carrier fleece is at the shortest distance to the spray head (5), this distance being in the range from 5 to 20 cm and especially in the range from 8 to 12 cm.

30. Apparatus according to any of Claims 27 to 29, **characterized in that** the laydown site has a convexly curved geometry and is formed in particular by a roll (7) which is part of the transporting means.

31. Apparatus according to any of Claims 27 to 30, **characterized in that** the at least one nozzle is formed of a single slot nozzle whose width is equal to the width of the carrier fleece.

32. Apparatus according to any of Claims 27 to 31, **characterized in that** one or more air outlet nozzles are disposed around or to the side of the at least one nozzle.

33. Apparatus according to any one of Claims 27 to 32, **characterized in that** the feeding means (6) are formed of a shaker.

34. Apparatus according to any of Claims 27 to 33, **characterized in that** a suction means is provided for excess particles.

35. Filter having adsorption properties, **characterized in that** the filter contains a filter material according to any of Claims 1 to 18.

## Revendications

1. Matériau filtrant, en particulier sous forme de produits plats ou superficiels pour milieux fluides du type se composant d'une couche de support (3) et d'une couche d'adsorption (4), la couche d'adsorption (4) étant constituée par des fils collants par fusion (2) chargés de particules adsorbantes (1), **caractérisé en ce que** la portion collante par fusion représente 2 à 10 % en poids de la masse de la couche d'adsorption (4) et de la couche de support (3), et le matériau filtrant contient en outre de 300 g/m² à 3 500 g/m² de particules adsorbantes.

2. Matériau filtrant selon la revendication 1, **caractérisé en ce que** les particules adsorbantes (1) sont constituées par des silicates, des zéolithes et/ou en particulier du charbon actif.

3. Matériau filtrant selon la revendication 1 ou 2, **caractérisé en ce que** les fils collants par fusion (2) chargés de particules adsorbantes (1) adhèrent par une très faible surface à la couche de support (3).

4. Matériau filtrant selon l'une quelconque des revendications 1 à 3, **caractérisé en ce que** les fils collants par fusion (2) chargés de particules adsorbantes (1) constituent un réseau tridimensionnel irrégulier à larges mailles.

5. Matériau filtrant selon l'une quelconque des revendications précédentes, **caractérisé en ce que** la couche de support consiste en un feutre, une natte, un tissu ou un tricot.

6. Matériau filtrant selon l'une quelconque des revendications précédentes, **caractérisé en ce que** la couche de support (3) est constituée par un feutre à base de polyester, de polyoléfine, de polycarbonate, de polyuréthane ou de polyamide, ou d'une mousse de PUR réticulé.

7. Matériau filtrant selon l'une quelconque des revendications précédentes, **caractérisé en ce que** la colle par fusion consiste en un matériau à base de polyester, de polyoléfine, de de polyuréthane ou de polyamide, la colle par fusion assurant en particulier l'homogénéité par polymérisation avec la couche de support (3).

8. Matériau filtrant selon l'une quelconque des revendications précédentes, **caractérisé en ce que** la colle par fusion est une colle par fusion réactive se réticulant à froid en particulier à base de polyuréthane.

9. Matériau filtrant selon l'une quelconque des revendications précédentes, **caractérisé en ce que** les particules adsorbantes (1) sont contenues dans la couche adsorbante (1) en quantité allant jusqu'à 3 500 g/m², en particulier en quantité située dans l'intervalle de 300 à 1 500 g/m².

10. Matériau filtrant selon l'une quelconque des revendications précédentes, **caractérisé en ce que** la couche adsorbante (1) comporte sur sa face opposée à la couche de support (3) une couche de couverture.

11. Matériau filtrant selon la revendication 10, **caractérisé en ce que** la couche de couverture consiste en un feutre, une nappe, un tissu ou un tricot.

12. Matériau filtrant selon l'une des revendications 10 ou 11, **caractérisé en ce que** le matériau de la couche de couverture est homogénéisé par polymérisation avec le matériau de la couche de support et/ou de la colle par fusion.

13. Matériau filtrant selon l'une quelconque des revendications précédentes, **caractérisé en ce que** les particules adsorbantes (1) sont de forme sphérique et/ou irrégulière et présentent un diamètre de l'ordre de 0,05 à 2 mm.

14. Matériau filtrant selon l'une quelconque des revendications précédentes, **caractérisé en ce que** la colle par fusion présente un intervalle de point de ramollissement de 75 à 200 °C en particulier compris entre 100 et 150 °C.

15. Matériau filtrant selon l'une quelconque des revendications précédentes, **caractérisé en ce que** le diamètre des fils collants par fusion (2) est plus petit que le diamètre des particules adsorbantes (1) d'un facteur d'au moins 10.

16. Matériau filtrant selon l'une quelconque des revendications précédentes, **caractérisé en ce que** la portion de la couche d'adsorption (4) constituée par de la colle par fusion est comprise entre 2,5 et 5 % en poids.

17. Matériau filtrant selon l'une quelconque des revendications précédentes, **caractérisé en ce que** le matériau de support consiste en un réseau ou un feutre collant à la chaleur.

18. Matériau filtrant selon l'une quelconque des revendications précédentes, **caractérisé en ce que** sur la couche adsorbante (1) est déposée une autre couche filtrante.

19. Procédé pour la fabrication d'un matériau filtrant selon l'une quelconque des revendications précédentes, **caractérisé en ce que** au moins un fil collant par fusion provenant d'au moins une buse est projeté en direction d'un feutre de support guidé le long et à une certaine distance de la buse, la charge de particules adsorbantes du fil collant étant réalisée dans une zone située entre la buse et le feutre de support, et ce fil collant par fusion chargé de particules adsorbantes rencontrant ensuite le feutre de support et y adhérant par une de très faibles surfaces.

20. Procédé selon la revendication 19, **caractérisé en ce que** la projection des fils collants par fusion est réalisée sur une largeur qui correspond à celle de la couche de support.

21. Procédé selon l'une des revendications 19 ou 20, **caractérisé en ce que** la colle par fusion est extrudée sous pression hors d'une buse unique ou en forme de fente, au moins un courant d'air étant dirigé autour de la sortie de la colle par fusion ou latéralement par rapport à celle-ci en vue de l'étirement d'au moins une fibre.

22. Procédé selon l'une quelconque des revendications 19 à 21, **caractérisé en ce que** l'approvisionnement en particules adsorbantes est réalisé par un système à secousses.

23. Procédé selon l'une quelconque des revendications 19 à 22, **caractérisé en ce que** le feutre de support, dans la zone de rencontre avec au moins un fil collant par fusion chargé de particules adsorbantes est guidé le long d'un trajet arrondi convexe.

24. Procédé selon l'une quelconque des revendications 19 à 23, **caractérisé en ce que** la colle par fusion est échauffée avant la projection à une température de 20 à 50 ° supérieure à son point de fusion (point de ramollissement) et projetée au moyen d'air sous pression chaud à la même température.

25. Procédé selon la revendication 24,**caractérisé en ce que** l'air sous pression chaud frappe la colle par fusion avec une pression de l'ordre de 2 à 5 bars.

26. Procédé selon l'une quelconque des revendications 19 à 25, **caractérisé en ce que** la colle par fusion est projetée à raison de 100 à 200 g/minute en particulier à raison de 125 à 175 g/minute.

27. Installation pour la mise en oeuvre du procédé selon l'une quelconque des revendications 19 à 26, **caractérisée en ce qu'**une tête de projection (5) comportant au moins une buse est disposée à une certaine distance a du trajet d'un ruban de feutre de support (9) et sous un certain angle α par rapport à la verticale, l'installation comprenant au surplus un système d'approvisionnement (6) pour des particules adsorbantes et un système de transport pour un feutre de support, **en ce que** l'emplacement de sortie du système d'approvisionnement est positionné à une distance de 1 à 10 cm de la tête de projection (6) et **en ce que** l'angle α est de 20 à 45°, de manière telle que les particules adsorbantes demeurent collées sur les fils collants par fusion obtenus.

28. Installation selon la revendication 27, **caractérisée en ce que** l'angle α est compris entre 25 et 35°.

29. Installation selon l'une des revendications 27 ou 28, **caractérisée en ce que** l'installation présente, pour les fils collants par fusion chargés de particules adsorbantes un emplacement de dépôt auquel le feutre de support, sur son trajet de transport, présente la plus courte distance de la tête de projection et cette distance est de 5 à 20 cm, en particulier de 8 à 12 cm.

30. Installation selon l'une quelconque des revendications 27 à 29, **caractérisée en ce que** l'emplacement de dépôt présente une géométrie arrondie convexe et est en particulier constituée par un cylindre (7) faisant partie du système de transport.

31. Installation selon l'une quelconque des revendications 27 à 30, **caractérisée en ce que** la buse est constituée par une pluralité de buses individuelles en forme de fentes qui, par leur largeur, correspondent à la largeur du feutre de support.

32. Installation selon l'une quelconque des revendications 27 à 31, **caractérisée en ce que** autour de la buse ou latéralement par rapport à elle sont disposées une ou plusieurs buses de sortie d'air.

33. Installations selon l'une quelconque des revendications 27 à 32, **caractérisée en ce que** le système d'approvisionnement (6) est constitué par un dispositif à secousses.

34. Installation selon l'une quelconque des revendications 27 à 33, **caractérisée en ce qu'**il est prévu un système d'aspiration pour les particules en excès.

35. Filtre à propriété d'adsorption,c aractérisé en ce que le filtre contient un matériau filtrant selon l'une quelconque des revendications 1 à 18.
